## Europäisches Patentamt

## European Patent Office

## Office européen des brevets

(11) Veröffentlichungsnummer: **0 113 441**
**B2**

(12) **NEUE EUROPÄISCHE PATENTSCHRIFT**

(45) Veröffentlichungstag der neuen Patentschrift:
**16.08.90**

(21) Anmeldenummer: **83112225.4**

(22) Anmeldetag: **06.12.83**

(51) Int. Cl.⁵: **F 02 B 27/00,** F 02 M 35/10

(54) **Luftansauganlage für Brennkraftmaschinen, insbesondere Einspritz-Brennkraftmaschinen.**

(30) Priorität: **15.12.82 DE 3246372**

(43) Veröffentlichungstag der Anmeldung:
**18.07.84 Patentblatt 84/29**

(45) Bekanntmachung des Hinweises auf die
Patenterteilung:
**16.07.86 Patenblatt 86/29**

(45) Bekanntmachung des Hinweises auf die
Entscheidung über den Einspruch:
**16.08.90 Patentblatt 90/33**

(84) Benannte Vertragsstaaten:
**DE FR GB IT**

(56) Entgegenhaltungen:
**DE-A-2 527 774**
**DE-A-2 914 172**
**DE-A-2 933 331**
**DE-B-1 238 718**
**DE-B-1 933 271**
**US-A-4 323 041**

**ATZ Automobiltechnische Zeitschrift 78/5, S. 233-236**

**Zeitschrift "mot" 9/1980, S. 50-60**

(73) Patentinhaber: **Bayerische Motoren Werke Aktiengesellschaft**
**Patentabteilung AJ-30 Postfach 40 02 40**
**Petuelring 130**
**D-8000 München 40 (DE)**

(72) Erfinder: **Brox, Werner, Dipl.-Ing.**
**Franz-Sebeck-Strasse 16**
**A-4400 Steyr (AT)**

**Beschreibung**

Die Erfindung geht gemäss dem Oberbegriff des Hauptanspruches von der DE—A—2 527 774 aus.

Bei der bekannten Bauart sind die mit den Anschlüssen verbundenen, längengleichen U-Form-Schenkel zueinander parallel angeordnet. Die angrenzenden, längengleichen U-Form-Stege sind von beiden Seiten gegen eine mittlere Querebene des Verteilergehäuses derart verschwenkt angeordnet, dass deren Mündungen einen kleineren Abstand voneinander aufweisen als deren Verbindungsenden zu den anschlussseitigen U-Form-Schenkeln. Durch diese Anordnung der U-Form-Stege kann sich das Verteilergehäuse von der Querebene aus zwar zu beiden Enden hin verjüngen, jedoch ist die gesamte Baulänge des Verteilergehäuses durch den parallelen Abstand der äussern Einzelsaugrohre bestimmt. Die bekannte Luftansauganlage weist in ihrem der Maschine entfernt Bereich einen erheblichen Raumbedarf auf.

Aufgabe der Erfindung ist es, eine Luftansauganlage der bekannten Bauart bei etwa längengleichen, U-förmigen Einzelsaugrohren in ihrem maschinenfernen Bereich mit geringem Raumbedarf auszubilden.

Diese Aufgabe wird durch die im Kennzeichen des Hauptanspruches angegebenen Merkmale gelöst. Damit kann in vorteilhafter Weise bei einer Mehrzylinder-Reihenbrennkraftmaschine der am weitesten ausladene Teil der Luftansauganlage in kurzer Baulänge, d.h. relativ schmal ausgeführt werden. Zu den unterhalb der Luftansauganlage in beiden Endbereichen der Brennkraftmaschine angeordneten Hilfsaggregaten ist damit auch die Zugänglichkeit verbessert. Weiter ist zu der benachbarten Wand des Motorraumes eines Kraftahrzeuges zusätzlicher Einbauraum gewonnen. Schliesslich wird bei einer Luftansauganlage in Gussausführung mit durch gemeinsame, ebene Trennwände eng aneinander liegende Einzelsaugrohre Gewicht gespart.

Werden bei einer Luftansauganlage die anschlussseitigen, d.h. zur Maschine verlaufenden U-Form-Schenkel der Einzelsaugrohre für eine kompakte Gestaltung bereits in geringem Abstand von der Maschine zusammengeführt, so können die daraus sich ergebenden unterschiedlichen Längen der anschlussseitigen U-Form-Schenkel durch die Anordnung der mit den Mündungen verbundenen U-Form-Schenkel in Verbindung mit Merkmalen des Ansprüche 2 vorteilhaft ausgeglichen werden. Die Kombination der Merkmale, den längeren anschlussseitigen U-Form-Schenkeln entsprechend kürzere U-Form-Schenkel mündungsseitig zuzuordnen und zugleich deren Mündungen entsprechend den unterschiedlichen Abständen vom jeweiligen U-Form-Steg in der gegenseitigen Höhenlage gestaffelt am Verteilergehäuse anzuordnen, ergibt weiteren konstruktiven Freiraum. Neben einem von der Querebene zu den Enden sich verjüngenden Verteilergehäuse können die anschlussseitigen U-Form-Schenkel im Bereich der Zusammenführung in einer gemeinsamen Ebene angeordnet sein. Die daran angrenzenden U-Form-Stege können über gleiche Abschnitte miteinander fluchtend angeordnet sein. Damit weist die Luftansauganlage im Bereich der eng aneinanderliegenden Einzelsaugrohre eine wenig zerklüftete Aussenkontur auf. Bei einer Luftansauganlage in einstückiger Gussausführung ist dieser relativ glattflächige Bereich besonders geeignet für eine einfache Anordnung von Kernstützen.

Eine kompakte und in den Aussenkonturen besonders glattflächige Anordnung ist mit den Merkmalen des Anspruches 3 erreicht, nach der die U-Form-Stege und angrenzende Abschnitte der U-Form-Schenkel im Querschnitt im wesentlichen quadratisch bis rechteckförmig gestaltet sind. Im besonderen weist jedes Einzelsaugrohr im Bereich der U-Form-Stege einen etwa quadratischen Querschnitt auf, von dem aus es zur Mündung hin in einen Rechteckquerschnitt bei gleichbleibender Breite übergeht. Jeder Rechteckquerschnitt geht im Bereich der Mündungen in Einlaufradien über, wobei die Einlaufradien nebeneinanderliegender Einzelsaugrohre das Mass de Auffächerung der mit den Mündungen verbunden U-Form-Schenkel bestimmen.

Die zu den Mündungen im Verteilergehäuse sich stetig und/od. unstetig im Querschnitt erweiternden Einzelsaugrohre ergeben mit im Querschnitt hochkant-rechteckigen Mündungen und den Einlaufradien bei guten Einströmverhältnissen und hoher Füllung über einen weiten Drehzahlbereich ein relativ kurzbauendes Verteilergehäuse von kompakter Grösse.

Die DE—C—1 231 060 zeigt eine gattungsfremde Saugrohranlage für Mehrzylinder-Reihenbrennkraftmaschinen mit einem Verteilergehäuse, dessen Volumen auf das Gesamthubvolumen der Maschine abgestimmt ist. Gruppen längengeicher Einzelsaugrohre schliessen an das relativ kurzbauende Verteilergehäuse in gegenseitigen Abständen an, die gegenüber ihren Abständen gemeinsamer Anschlüsse für die Einlasskanäle geringer sind, wobei die Einzelsaugrohre jeder Gruppe zum Verteilergehäuse hin aufgefächert sind. Durch die andere Zielsetzung sowie den aus im wesentlichen geraden Rohrabschnitten gebildeten Einzelsaugrohren ist dieser Druckschrift jedoch keine Anregung für den Anmeldgegenstand zu entnehmen.

In der Zeichnung ist ein Ausführungsbeispiel der Erfindung dargestellt. Es zeigen:

Fig. 1 die Seitenansicht einer Luftansauganlage für eine Mehrzylinder-Reihenbrennkraftmaschine,

Fig. 2 die Draufsicht der Luftansauganlage nach Fig. 1,

Fig. 3 die Stirnansicht der Luftansauganlage nach Fig. 1 und Fig. 2 und

Fig. 4 die an Ansicht eines Teiles der anschlussseitigen U-Form-Schenkel gemäss der Schnittlinie IV—IV in Fig. 1.

Eine Luftansauganlage 1 für eine nicht dargestellte 6-Zylinder-Reihenbrennkraftmaschine mit Kraftstoffeinspritzung umfasst ein Verteilergehäuse 2 mit einem Lufteinlass 3. Vom Verteilergehäuse 2 führen in einer Reihe nebeneinander angeordnete, etwa längengleiche, U-förmige Einzelsaugrohre 4, 5, 6, 7, 8 und 9 zu Anschlüssen 10 für Einlasskanäle der Maschine. Die Einzelsaugrohre 4, 5, 6, 7, 8 und 9 liegen im Bereich ihrer U-Form-Stege 4', 5', 6', 7', 8' und 9' eng nebeneinander mit einer Gesamtabmessung, die kleiner ist als die Gesamtlänge des Verteilergehäuses 2. Die Gesamtlänge des Verteilergehäuse 2 wiederum ist kleiner als der maximale Abstand der Anschlüsse 10 der äusseren Einlasskanäle der Maschine. Zu den Mündungen 11 im Verteilergehäuse 2 hin vergrössern sich die Abstände zwischen den vorgenannten Einzelsaugrohren, wobei die Abstände an den Mündungen 11 im Verteilergehäuse 2 durch die Einlaufradien 12, 13 bestimmt sind.

Die mit den Mündungen 11 verbundenen U-Form-Schenkel 4'', 5'', 6'', 7'', 8'' und 9'' weisen zum Ausgleich der unterschiedlichen Längen der zur Maschine verlaufenden, anschlussseitigen U-Form-Schenkel 4''', 5''', 6''', 7''', 8''' und 9''' unter schiedliche Längen auf.

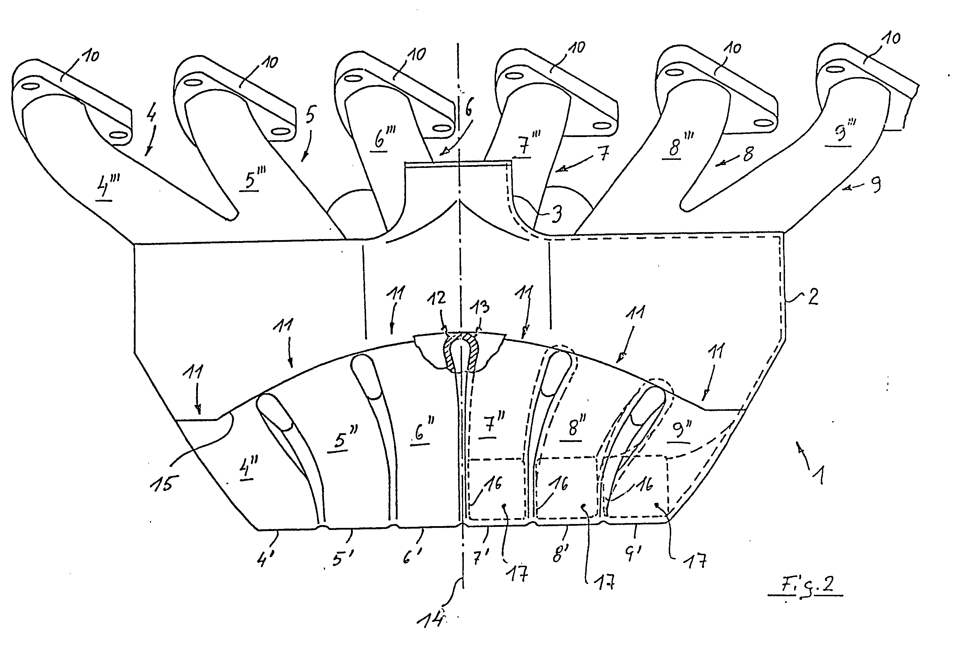

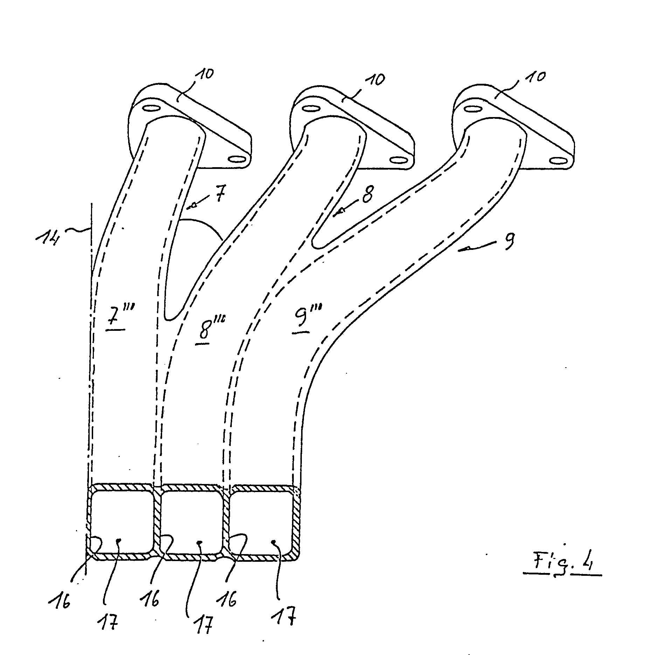

Wie aus den Fig. 2 und 4 hervorgeht, sind die anschlussseitigen U-Form-Schenkel 4''', 5''', 6''', 7''', 8''' und 9''' bereits in relativ geringen Abstand von der Maschine bzw. ihren Anschlüssen 10 zusammengeführt. Damit weisen die äusseren der vorgespannten U-Form-Schenkel bereits erhebliche Längen auf, so dass die zugehörigen, mit den Mündungen 11 verbundenen U-Form-Schenkel 4'' und 9'' die relativ geringste Länge haben. Die nächstinneren, mündungsseitigen U-Form-Schenkel 5'' und 8'' bzw. 6'' und 7'' sind jeweils um das fehlende Mass in der Länge der zugehörigen anschlussseitigen U-Form-Schenkel 5''' und 8''' bzw. 6''' und 7''' länger.

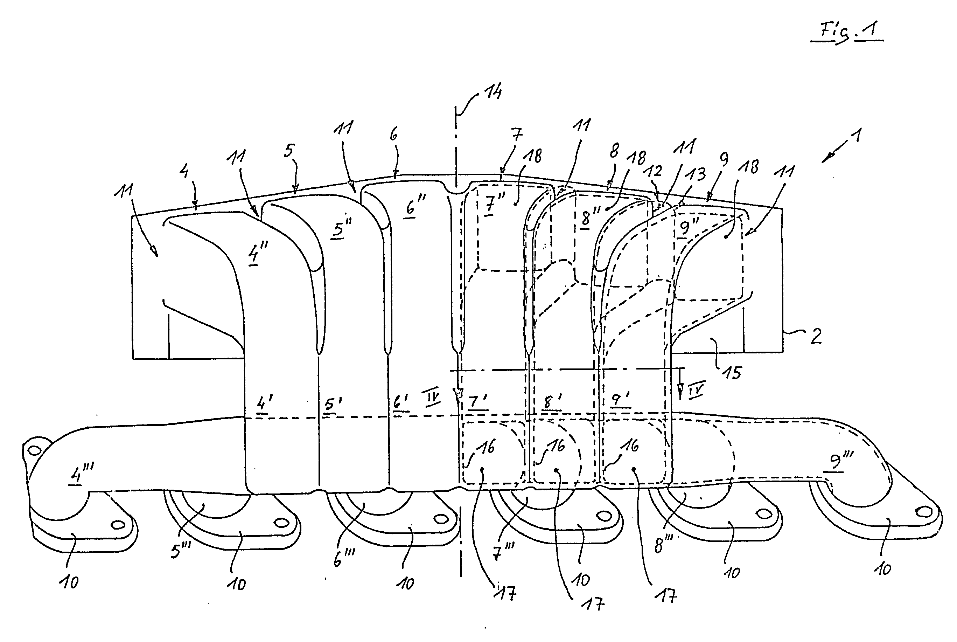

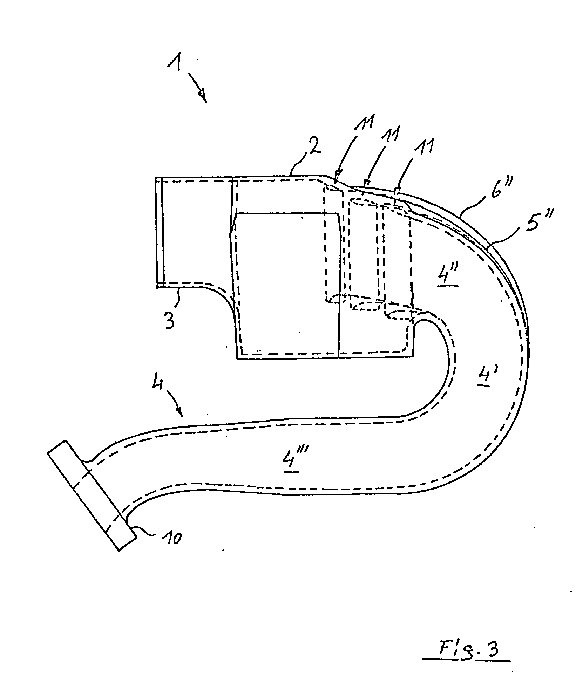

Wie die Fig. 1 und 4 zeigen, sind die eng nebeneinanderleigenden Bereiche der anschlussseitigen U-Form-Schenkel 4''', 5''', 6''', 7''', 8''' und 9''' in einer gemeinsamen Ebene angeordnet. An diese grenzen die U-Form-Stege 4', 5', 6', 7', 8' und 9' mit untereinander gleichen Krümmungsradien bis etwa zur gemeinsamen Ebene der Krümmungsmittelpunkte an, wobei diese gekrümmten Abschnitte der U-Form-Stege 4' mit 9' miteinander in einer Reihe fluchtend ausgebildet sind, Fig. 3. Um bei dieser Anordnung die Längenausgleiche an den mündungsseitigen U-Form-Schenkel 4'', 5'', 6'', 7'', 8'' und 9'' zu verwirklichen, sind die Mündungen 11 am Verteilergehäuse 2 symmetrisch zu einer mittleren Querebene 14 angeordnet. Weiter sind paarweise angeordnete Mündungen zu den jeweils gegenüber in einer gemeinsamen Ebene liegenden U-Form-Schenkeln 4''' und 9''' bzw. 5''' und 8''' bzw. 6''' und 7''' abstandsgleich. Ferner weisen die der Querebene 14 benachbarten Mündungen 11 den grössten Abstand und das jeweils beiderseits nach aussen anschliessende Paar einen geringeren Abstand auf. Schliesslich weisen die Mündungen 11 entsprechend den unterschiedlichen Längen der jeweils zugeordneten U-Form-Schenkel 4'', 5'', 6'', 7'', 8'' und 9'' unterschiedliche Abstände von den jeweils zugeordneten U-Form-Stegen 4', 5', 6', 7', 8', 9' auf. Auf diese unterschiedlichen Abstände abgestimmt weist das Verteilergehäuse 2 im Bereich der Mündungen der Einzelsaugrohre 4, 5, 6, 7, 8 und 9 eine Wandung 15 mit bogenförmigen Verlauf auf. Eine besonders kompakte Gestaltung der Luftansauganlage 1 im ausladenden Bereich ist mit Einzelsaugrohren 4, 5, 6, 7, 8 und 9 erreicht, wenn diese wenigstens im Bereich ihrer U-Form-Stege 4', 5', 6', 7', 8' und 9' gemeinsame, ebene Trennwände — 16 in Fig. 4 — aufweisen.

Um mit den als Schwingrohre dienenden Einzelsaugrohren 4, 5, 6, 7, 8, 9 zugleich eine gute Füllung über einen weiten Drehzahlbereich der Maschine zu erreichen, weisen diese von den Anschlüssen 10 bis zu den Mündungen 11 im Verteilergehäuse 2 sich erweiternde Querschnitte auf, wobei im Bereich der U-Form-Stege 4', 5', 6', 7', 8' und 9' jeweils ein quadratischer Querschnitt — 17 in Fig. 1 und 4 — vorgesehen ist. Jeder dieser Querschnitte geht bei gleichbleibender Breite zur jeweiligen Mündung 11 in einen Rechteckquerschnitt — 18 in Fig. 1 — über.

Mit den erfindungsgemäss eng nebeneinanderliegenden Einzelsaugrohren 4, 5, 6, 7, 8, 9 im Bereich der U-Form-Stege 4', 5', 6', 7', 8' und 9' und damit im am weitesten ausladenden Teil der Luftansauganlage 1 erreicht diese hierbei eine relativ kurze Baulänge, die einerseits zu einem verringerten Raumbedarf führt und andererseits die Zugänglichkeit zur Brennkraftmaschine verbessert.

**Patentansprüche**

1. Luftansauganlage für Brennkraftmaschinen, insbesondere Einspritz-Brennkraftmaschinen,

mit von einem Verteilergehäuse (2), dans parallel zur Maschinenachse verläuft, ausgehenden, in einer Reihe nebeneinander angeordneten, etwa längengleichen, U-förmigen Einzelsaugrohren (4—9) zu Anschlüssen (10) für Einlaßkanäle der Maschine,

wobei die Einzelsaugrohre an den Mündungen (11) im Verteilergehäuse Einlaufradien (12, 13) aufweisen, dadurch gekennzeichnet,

daß die Einzelsaugrohre (4—9) im Bereich ihrer U-Form-Stege (4'—9') über gemeinsame, ebene Trennwände (16) eng benachbart angeordnet sind mit einer Gesamtabmessung,

die kleiner ist als die Gesamtlänge des Verteilergehäuses (2),

die wiederum kleiner ist als der maximale Abstand der Anschlüsse (10) der äußeren Einlaßkanäle der Maschine,

wobei sich die Abstände zwischen den Einzelsaugrohren (4—9) zu den Mündungen (11) im Verteilergehäuse (2) hin entsprechend den Einlaufradien (12, 13) an den Mündungen (11) vergrößern, daß ferner die U-Form-Stege (4'—9') in einer Reihe fluchtend angeordnet sind,

wobei zum Ausgleich der unterschiedlichen Längen der zur Maschine verlaufenden U-Form-Schenkel (4'''—9''') die zum Verteilergehäuse (2) gerichteten U-Form-Schenkel (4''—9'') durch von der Reihe der U-Form-Stege (4'—9') unterschiedlich beabstandete Mündungen (11) unterschliedliche Längen aufweisen.

2. Luftansauganlage nach Anspruch 1, dadurch gekennzeichnet,

daß die Mündungen (11) am Verteilergehäuse (2) symmetrisch zu einer mittleren Querebene (14) angeordnet sind und

daß paarweise angeordnete Mündungen (11) zu den jeweils gegenüberliegenden U-Form-Schenkeln (6''', 7''', 5''', 8''', 4''', 9''') abstandsgleich sind,

wobei die der Querebene (14) benachbarten Mündungen den größten Abstand und das jeweils beiderseits nach außen anschließende Paar der Mündungen (11) einen geringeren Abstand aufweisen.

3. Luftansauganlage nach Anspruch 2,

mit Einzelsaugrohren (4—9), die zu den Mündungen im Verteilergehäuse (2) sich erweiternde Querschnitte aufweisen, dadurch gekennzeichnet,

daß jedes Einzelsaugrohr (4—9) im Bereich der U-Form-Stege (4'—9') einen etwa quadratischen Querschnitt (17) aufweist und

zur Mündung (11) am Verteilergehäuse (2) hin in einen Rechteckquerschnitt (18) bei gleichbleibender Breite übergeht.

4. Luftansauganlage nach Anspruch 1, dadurch gekennzeichnet, daß das Verteilergehäuse (2) im Bereich der Mündungen (11) der Einzelsaugrohre (4—9) eine Wandung (15) aufweist, deren etwa bogenförmiger oder treppenförmiger Verlauf durch die unterschiedlichen Abstände der Mündungen von den U-Form-Stegen (4'—9') bestimmt ist.

**Revendications**

1. Dispositif d'admission d'air pour moteurs à combustion interne, notamment pour des moteurs à combustion interne à injection, dispositif comportant:

des tubulures d'admission individuelles (4—9) en forme de U, à peu près de la même longueur, disposées en lignes les unes à côté des autres, et partant d'un carter de répartition (2) s'étendant parallèlement à l'axe du moteur pour aboutir à des raccordements (10) pour les canaux d'admission du moteur, ces tubulures d'admission individuelles comportant à leurs embouchures (11) dans le carter de répartition, des arrondis d'entrée (12, 13), dispositif caractérisé

en ce que les tubulurs d'admission individuelles (4—9), dans la zone des âmes (4'—9') de leurs formes en U, sont placés étroitement les unes contre les autres par leurs parois de séparation (16) avec un dimensionnement total,

qui est plus petit que la longueur totale du carter de répartition (2),

qui à son tour est plus petit que la distance maximale des raccordements (10) des canaux d'admission externes du moteur,

les distances ente les tubulures d'admission individuelles (4—9) augmentant en direction des embouchures (11) sur le carter de répartition (2) en fonction des arrondis d'entrée (12, 13) sur les embouchures (11).

en ce que qu'en outre les âmes (4'—9') des formes en U sont alignées sur une rangée, et pour compenser les longueurs différentes des branches (4'''—9''') des formes en U se dirigeant vers le moteur, les branches (4''—9'') des formes en U en direction du carter de répartition (2) comportent des longueurs différentes à partir de la rangée des âmes (4'—9') des formes en U, en raison des embouchures (11) espacées différemment.

2. Dispositif d'admission d'air selon la revendication 1, caractérisé

en ce que les embouchures (11) sur le carter de répartition (2) sont disposées symétriquement par rapport à un plan transversal médian et

en ce que les embouchures (11) disposées par paires sont à des distances égales par rapport aux branches respectivement placées en face (6''', 7'''; 5''', 8'''; 4''', 9''') des formes en U,

les embouchures voisines du plan transversal (14) présentant la plus grande distance, tandis que la paire des embouchures (11) se raccordant respectivement vers l'extérieur, comporte une distance plus réduite.

3. Dispositif d'admission d'air selon la revendication 2, avec des tubulures d'admission individuelles (4—9) qui présentent des sections transversales allant en s'élargissant vers les embouchures dans le carter de répartition (2),

caractérisé en ce que

chaque tubulure d'admission individuelle (4—9) comporte dans la zone de l'âme (4'—9') de sa forme en U une section transversale (17) à peu près carrée, qui

en allant vers l'embouchure (11) sur le carter de répartition (2) se transforme en une section transversale rectangulaire en conservant la même largeur.

4. Dispositif d'admission d'air selon la revendication 1, caractérisé en ce que

le carter de répartition (2) comporte, dans la zone des embouchures (11) des tubulures d'admission individuelles (4—9) une paroi (15) dont la forme en arc ou en trapèze est déterminée par les distances différentes des embouchures à partir des âmes (4'—9') des formes en U.

**Claims**

1. An air-intake installation for internal combustion engines, especially injection-type internal combustion engines,

with U-shaped individual intake pipes (4 to 9) of substantially equal length which are arranged in a row side by side and which issue from a manifold housing (2), extending parallel to the axis of the engine, to connections (10) for inlet passages of the engine,

the individual intake pipes having inlet radii (12, 13) at the openings (11) in the manifold housing, characterised

in that the individual intake pipes (4 to 9) lie closely side by side in the region of their U-form cross-pieces (4' to 9') via common, flat, partition walls (16), and with an overall dimension

which is smaller than the overall length of the manifold housing (2),

which, in turn, is less than the maximum interval of the connections (10) of the outer inlet passages of the engine,

while the distances between the individual intake pipes (4 to 9) increase towards the openings (11) in the manifold housing (2) corresponding to the inlet radii (12, 13) at the openings (11),

that, in addition, the U-form cross-pieces (4' to 9') are arranged so as to be aligned in a row,

while the U-form legs (4'' to 9'') directed towards the manifold housing (2) have different lengths throughout openings (11) at different distances from the row of U-form cross-pieces (4' to 9') to compensate for the different lengths of the U-form legs (4''' to 9''') extending to the engine.

2. An air-intake installation according to Claim 1, characterised in that

the openings (11) on the manifold housing (2) are arranged symmetrically in relation to a central transverse plane (14) and

in that openings (11) arranged by pairs are equidistant from the opposite U-form legs (6''', 7''', 5''', 8''', 4''', 9''') in each case,

while the openings adjacent to the transverse plane (14) have the greatest distance and the pair of openings (11) outwardly adjoining on both sides in each case have a smaller distance.

3. An air-intake installation according to Claim 2,

having individual intake pipes (4 to 9) which comprise cross-sections widening to the openings in the manifold housing (2),

characterised in that

each individual intake pipe (4 to 9) is of substantially square cross-section (17) in the region of the U-form cross-pieces (4' to 9') and

merges, towards the opening (11) on the manifold housing (2), into a rectangular cross-section (18) with the width remaining constant.

4. An air-intake installation according to Claim 1, characterized in that the manifold housing (2) comprises, in the region of the openings (11) of the individual intake pipes (4 to 9), a wall (15) the somewhat arcuate or step-shaped course of which is determined by the different distances of the openings from the U-form cross-pieces (4' to 9').

Fig. 1

Fig.2

EP 0 113 441 B2

Fig. 3

3

Fig. 4